# DEMANDE DE BREVET EUROPEEN

(11) **EP 4 717 861 A1**
(43) Date de publication de la demande: **01.04.2026**
(21) Numéro de dépôt: 25201670.4
(22) Date de dépôt: 11.09.2025
(51) Int. Cl.: E05D 1/06, E05D 11/00, E05D 11/10, E05D 1/04

(54) **CHARNIÈRE POUR PORTE D'UN AÉRONEF, AVEC PASSAGE D'UN CÂBLE**

(30) Priorité: 27.09.2024 FR 2410359
(71) Demandeur: AIRBUS OPERATIONS (S.A.S.), 31060 Toulouse (FR)
(72) Inventeur: BOISNIER, Benjamin, 31060 Toulouse (FR)
(74) Mandataire: Airbus-OPS SAS

(57) **Abrégé**

L'invention concerne une charnière destinée à ouvrir ou fermer une porte, par exemple d'une armoire électrique d'un aéronef, comprenant au moins une première paroi (17, 18, 19) et une deuxième paroi (45, 46) délimitant une ouverture angulaire de la charnière et un espace interne, creux, de la charnière, dimensionné pour recevoir un câble, la première et la deuxième paroi étant positionnées l'une relativement à l'autre pour :
- ouvrir la charnière dans une position d'insertion ou d'extraction du câble, pour laisser passer le câble par l'ouverture angulaire de la charnière dans l'espace interne ou hors de l'espace interne, et,
- fermer la charnière dans des positions de travail de la charnière, entre une position d'ouverture maximale de la porte et une position de fermeture de la porte, pour obturer l'ouverture angulaire de la charnière, de sorte à pouvoir enfermer le câble dans l'espace creux.

## Description

### Domaine technique

La présente invention se rapporte à une charnière pour une porte, par exemple pour une armoire électrique d'un aéronef.

### Technique antérieure

Un aéronef comprend généralement une multitude de câbles électriques qu'il faut placer judicieusement, à la fois pour encombrer le moins possible l'aéronef, et pour éviter tout endommagement des câbles. En particulier, il est délicat de positionner correctement les câbles au travers de porte, par exemple d'une armoire électrique, de l'aéronef.

Le but de l'invention est de remédier au moins partiellement à cet inconvénient.

### Résumé

A cet effet, il est proposé une charnière destinée à ouvrir ou fermer une porte, par exemple d'une armoire électrique d'un aéronef, comprenant au moins une première paroi et une deuxième paroi délimitant une ouverture angulaire de la charnière et un espace interne, creux, de la charnière, dimensionné pour recevoir un câble, la première et la deuxième paroi étant positionnées l'une relativement à l'autre pour :
- ouvrir la charnière dans une position d'insertion ou d'extraction du câble, pour laisser passer le câble par l'ouverture angulaire de la charnière dans l'espace interne ou hors de l'espace interne, et,
- fermer la charnière dans des positions de travail de la charnière, par exemple entre une position d'ouverture maximale de la porte et une position de fermeture de la porte, pour obturer l'ouverture angulaire de la charnière, de sorte à pouvoir enfermer le câble dans l'espace creux.

Grâce à la charnière selon la présente invention, il est possible de positionner le câble dans la charnière, dans l'axe de celle-ci, ce qui simplifie le câblage électrique de l'aéronef et en particulier celui d'une armoire électrique, réduit l'encombrement dû aux câbles, et assure une protection améliorée des câbles. De surcroît, on peut déposer la charnière sans couper le câble, ou encore changer le câble sans démonter la charnière.

Selon un autre aspect, chacune des première et deuxième paroi, respectivement, s'étend entre deux extrémités espacées l'une de l'autre pour former ouverture angulaire et délimite un espace interne, creux, la charnière étant conformée pour que dans la position d'insertion ou d'extraction du câble, l'ouverture angulaire de la première paroi et l'ouverture angulaire de la deuxième paroi se superposent, dans les positions de travail de la porte, l'ouverture angulaire de la première paroi est décalée de l'ouverture angulaire de la deuxième paroi pour fermer la charnière, les première et deuxième parois étant alignées de sorte à définir un axe de la charnière.

Selon un autre aspect, la charnière comprend une partie, dite partie mobile, destinée à être fixée à la porte de l'armoire, et une partie, dite immobile, destinée à être fixée à un caisson de l'armoire, la partie mobile comprenant au moins un charnon formant ladite première paroi de la charnière et la partie immobile comprenant au moins un charnon formant ladite deuxième paroi de la charnière.

Selon un autre aspect, l'une de la partie mobile et la partie immobile comprend un nombre de charnons supérieur de un au nombre de charnons de l'autre de la partie mobile et de la partie immobile.

Selon un autre aspect, l'une des parties mobile et immobile comprend au moins deux charnons espacés l'un de l'autre de sorte à former un guidage d'au moins un charnon de l'autre des parties mobile et immobile.

Selon un autre aspect, la charnière comprend un dispositif de verrouillage conformé pour bloquer la charnière en position fermée.

L'invention a également pour objet une armoire électrique, comprenant une charnière telle que décrite précédemment.

L'invention a également pour objet un aéronef, comprenant une armoire électrique telle que décrite précédemment.

L'invention a également pour objet une trappe d'aéronef, comprenant une charnière telle que décrite précédemment.

### Brève description des dessins

D'autres caractéristiques, détails et avantages apparaîtront à la lecture de la description détaillée ci-après, et à l'analyse des dessins annexés, sur lesquels :
**Fig. 1**

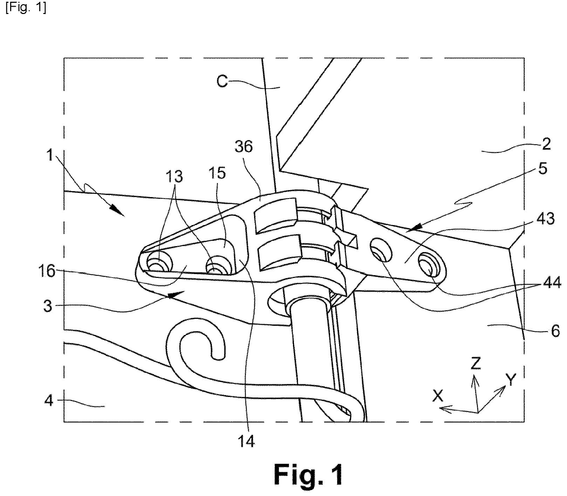

   [Fig. 1] est une vue schématique en perspective d'une charnière installée dans une armoire électrique d'un aéronef et entourant un câble selon un premier mode de réalisation de l'invention, dans une position d'ouverture maximale d'une porte de l'armoire électrique.
**Fig. 2**

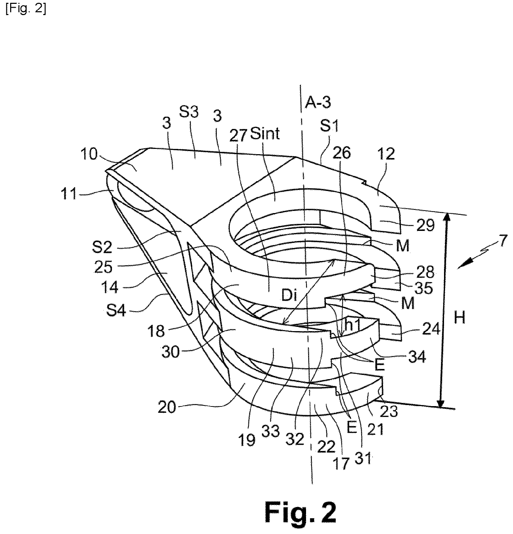

   [Fig. 2] est une vue schématique en perspective d'une partie mobile de la charnière de la figure 1.
**Fig. 3**

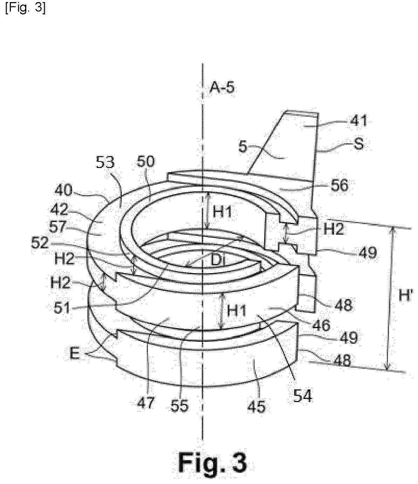

   [Fig. 3] est vue schématique en perspective d'une partie immobile de la charnière de la figure 1.
**Fig. 4**

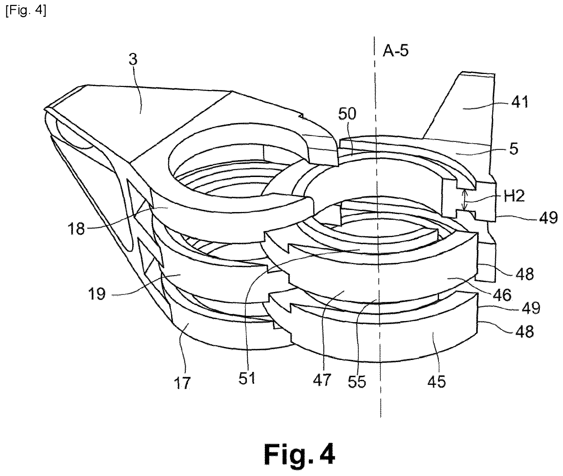

   [Fig. 4] est une vue schématique en perspective de la partie mobile de la figure 2 et de la partie immobile de la figure 3 dans une position de rapprochement des deux parties, en vue de leur assemblage.
**Fig. 5**

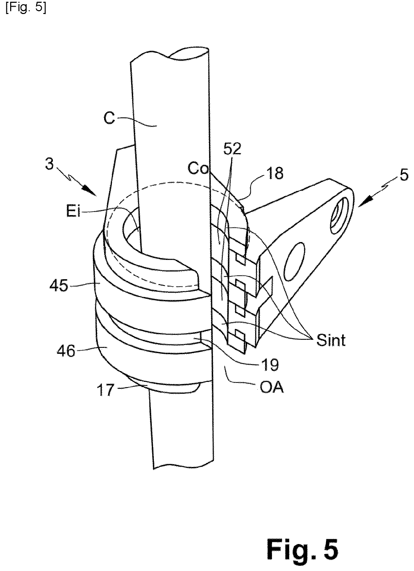

   [Fig. 5] est une vue schématique en perspective de la charnière de la figure 1, dans une position d'insertion ou d'extraction d'un câble électrique.
**Fig. 6**

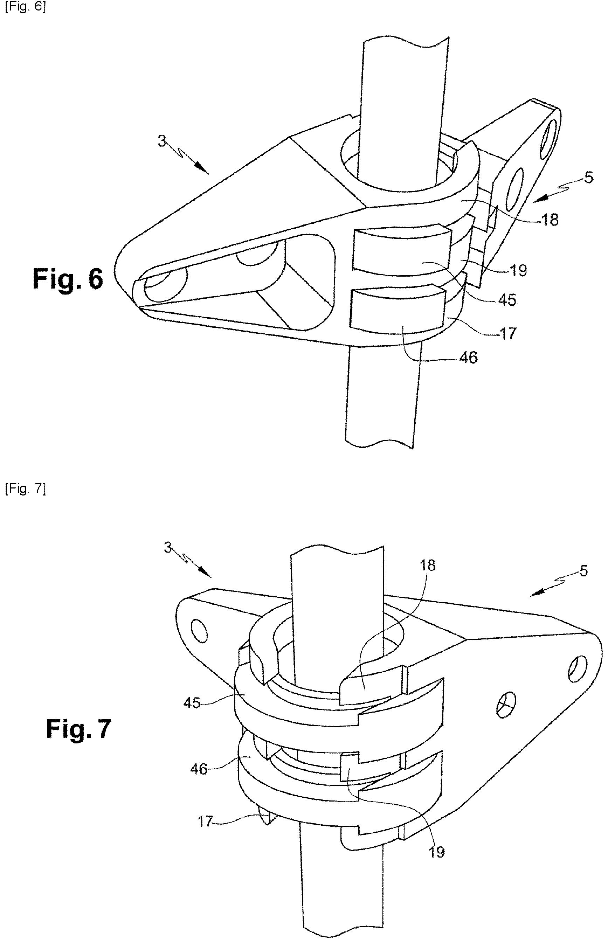

   [Fig. 6] est autre une vue schématique en perspective de la charnière de la figure 1, dans la position d'ouverture maximale de la porte.
**Fig. 7**
   [Fig. 7] est une vue schématique en perspective de la charnière de la figure 1, dans une position de fermeture de la porte.
**Fig. 8**

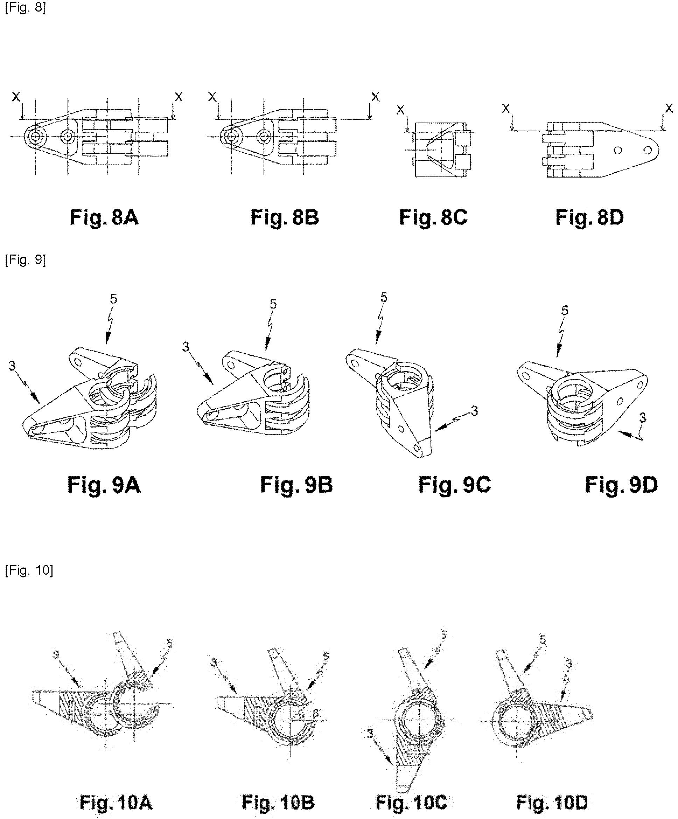

   [Fig. 8] illustre une vue schématique de côté de la charnière de la figure 1, les étapes A à D correspondant à des positions respectivement d'assemblage, insertion de câble, ouverture maximale de porte, et fermeture de porte.
**Fig. 9**
   [Fig. 9] est une vue schématique en perspective de la charnière de la figure 1, les étapes A à D correspondant aux positions déjà indiquées en référence à la figure 8.
**Fig. 10**
   [Fig. 10] illustre une vue schématique en coupe selon le plan X-X des étapes A à D de la figure 9.
**Fig. 11**

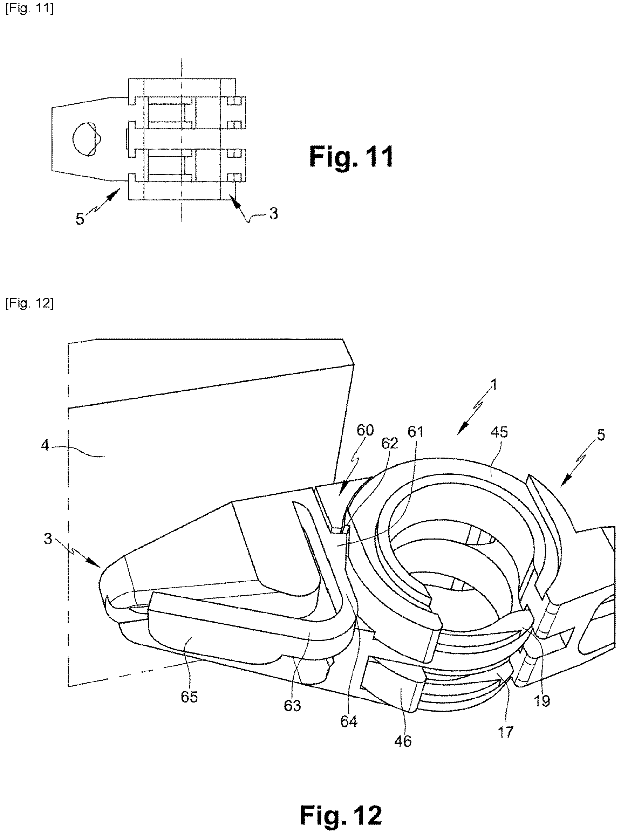

   [Fig. 11] est une vue schématique en coupe selon le plan XI-XI de l'étape D de la figure 8.
**Fig. 12**
   [Fig. 12] est une vue schématique partielle en perspective de la charnière de la figure 1, selon un autre mode de réalisation.
**Fig. 13**

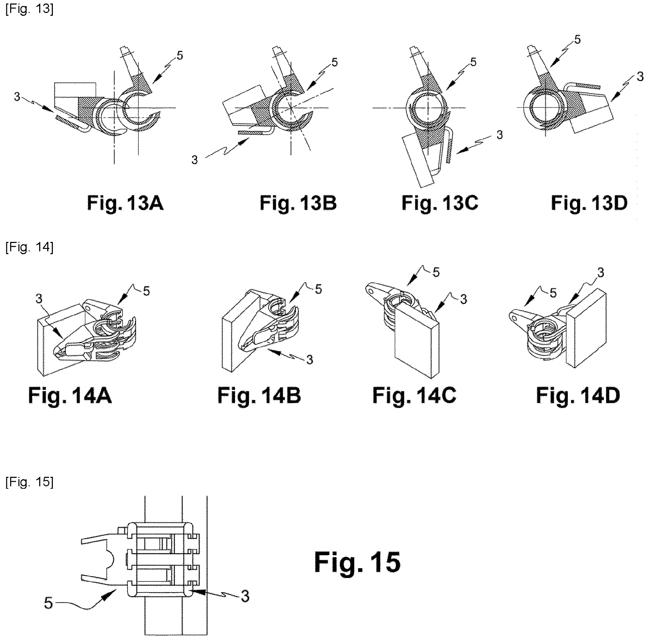

   [Fig. 13] illustre une vue schématique en coupe de la charnière de la figure 12, les étapes A à D correspondant à aux positions respectivement d'assemblage, insertion de câble, ouverture maximale de porte, et fermeture de porte.
**Fig. 14**
   [Fig. 14] est une vue schématique en perspective de la charnière de la figure 12, les étapes A à D correspondant aux positions déjà indiquées en référence à la figure 13.
**Fig. 15**
   [Fig. 15] est une vue schématique en coupe de la charnière de la figure14, dans l'étape D.

### Description des modes de réalisation

Les exemples et les conditions associées détaillés ici sont principalement destinés à aider le lecteur à comprendre les principes de la présente invention et non à limiter sa portée à ces exemples et conditions spécifiques. On comprendra que l'homme du métier peut concevoir divers agencements qui, bien qu'ils ne soient pas explicitement décrits ou représentés ici, incarnent néanmoins les principes de la présente invention et sont inclus dans son esprit et sa portée.

En outre, pour faciliter la compréhension, la description suivante peut décrire des mises en œuvre relativement simplifiées de la présente invention. Comme l'homme du métier le comprend, d'autres mises en œuvre de la présente invention peuvent être d'une plus grande complexité.

Dans certains cas, des exemples de modifications de la présente invention peuvent également être présentés. Ceci est fait simplement comme une aide à la compréhension, et, à nouveau pas pour définir la portée ou établir les limites de la présente invention. Ces modifications ne sont pas une liste exhaustive, et l'homme du métier pourra apporter d'autres modifications tout en restant dans le cadre de la présente invention.

En outre, toutes les déclarations ci-après relatives aux principes, aspects et mises en œuvre de la présente invention, ainsi que les exemples spécifiques de celle-ci, visent à englober à la fois les équivalents structurels et fonctionnels de celle-ci, qu'ils soient actuellement connus ou développés à l'avenir.

Comme visible sur les figures, l'invention a pour objet une charnière 1 destinée à équiper une porte d'un meuble 2, par exemple une armoire électrique d'un aéronef, ou encore une trappe de l'aéronef.

La charnière 1 comprend une première partie 3, dite partie mobile, destinée à être montée sur une porte 4 du meuble 2, et une deuxième partie 5, dite partie immobile, destinée à être montée sur un caisson 6 du meuble 2.

Pour simplifier la lecture de la présente description, on a illustré un repère orthonormé (X, Y, Z) sur les figures. La direction Z correspond à un axe de pivotement de la porte 6, choisi préférentiellement, mais non limitativement, vertical. Les directions X et Y sont orthogonales à la direction Z, la direction X étant dans le plan de la porte.

Chacune des parties mobile 3 et immobile 5 comprend au moins un charnon . De préférence, mais non limitativement, l'une des parties mobile 3 et immobile 5 comprend, par rapport à l'autre partie immobile 5 ou mobile 3, un nombre de charnons supérieur de un. Autrement dit, selon un mode de réalisation, la partie mobile 3 comprend N charnons et la partie immobile 5 comprend N+1 charnons. Selon un autre mode de réalisation, la partie immobile 5 comprend N charnons et la partie partie mobile 3 comprend N+1 charnons. Selon les modes de réalisation illustrés, la partie mobile 3 comprend trois charnons et la partie immobile 5 comprend deux charnons.

Les charnons de la partie mobile 3 et les charnons de la partie immobile 5 sont conformés pour coopérer ensemble, les charnons de la partie mobile 3 se déplaçant entre deux charnons de la partie mobile 5, de sorte qu'un câble électrique C peut être inséré dans la charnière 1, et maintenu dans la direction Z, comme il va être détaillé ultérieurement.

On décrit maintenant en détail la partie mobile 3.

Comme visible sur les figures, la partie mobile 3 comprend un corps 10, par exemple moulé, en plastique, s'étendant entre une première extrémité 11 et une deuxième extrémité 12.

Le corps 10 s'élargit depuis la première extrémité 11, fine et courbe, jusqu'à l'extrémité 12, plus large. Entre les extrémités 11, 12, le corps 10 est délimité par des surfaces externes S1, S2, S3 et S4, opposées deux à deux, s'étendant chacune entre la première extrémité 11 et la deuxième extrémité 12.

La surface S1 est sensiblement plane et percée de deux orifices 13. La surface S1 est destinée à être plaquée contre la porte 4. Les surfaces S3 et S4 présentent une forme générale trapézoïdale.

Le corps 10 comprend une cavité 14 creusée depuis la surface externe S2 et dont un fond 15 constitue une platine 16 de fixation de la partie mobile 3 à la porte 4. La platine 16 comprend les deux orifices 13, qui permettent de recevoir des vis pour solidariser la charnière 1 à la porte 4.

L'extrémité 12 porte les charnons 7 de la partie mobile 3. Sur les modes de réalisation illustrés, et de façon non limitative, la partie mobile comprend trois charnons, référencés 17, 18, et 19, et appelés respectivement charnon inférieur, charnon supérieur et charnon intermédiaire.

Les charnons 17, 18 et 19 sont de forme générale de cylindre creux et ouvert, comme il sera détaillé. Les cylindres des charnons 17, 18, 19 sont coaxiaux d'axe A-3 parallèle à la direction Z. Ainsi, le câble C peut être inséré dans les charnons et maintenu dans la charnière 1 le long de l'axe Z.

Le charnon inférieur 17 est une languette de forme générale de cylindre creux et ouvert, comme déjà indiqué, et délimité par une paroi extérieure 20 plane. Le charnon inférieur 17 comprend une première partie 21, dite de base, surmontée, le long de la direction Z, d'une deuxième partie 22, dite interne. Le première partie 21 s'étend entre une première extrémité 23 et une deuxième extrémité 24 de la languette, se faisant face et délimitant un angle d'ouverture α de la languette 17, par exemple compris entre 20° et 45°.

La partie interne 22 présente un angle d'ouverture plus grand que celui de la partie de base 21, ce qui délimite un épaulement E dans la paroi extérieure 20, le long de la direction Z. Dans un plan (X, Y), l'épaisseur de la partie de base 21, est supérieure à celle de la partie interne 22, ce qui délimite une marche M entre la partie de base 21 et la partie interne 22. La marche M rejoint en arête rectiligne l'épaulement E.

Autrement dit, le charnon inférieur 17 comprend deux blocs en forme C coaxiaux l'un sur l'autre, formés par la partie de base 21 et la partie interne 22, le C de la partie interne 22 étant plus petit, c'est-à-dire de plus faible épaisseur et de plus grande ouverture, que le C de la partie de base 21.

Le charnon supérieur 18 est le symétrique du charnon inférieur par rapport à un plan (X,Y).

Le charnon supérieur 18 est une languette de forme générale de cylindre creux et ouvert, comme déjà indiqué, et délimité par une paroi extérieure 25 plane. Le charnon supérieur 18 comprend une première partie 26, dite de base, sous laquelle se trouve, le long de la direction Z, une deuxième partie 27, dite interne. La partie de base 26 s'étend entre une première extrémité 28 et une deuxième extrémité 29 de la languette, se faisant face et délimitant un angle d'ouverture donné, par exemple compris entre 20° et 45°. Sur les modes de réalisation illustrés, l'angle d'ouverture α de la partie de base 26 est le même que celui de la partie de base 21 de la languette inférieure 17.

La partie interne 27 présente un angle d'ouverture plus grand que celui de la partie de base 26, ce qui délimite un épaulement E dans la paroi extérieure, 25 le long de la direction Z. Dans un plan (X, Y), l'épaisseur de la partie de base 26 est supérieure à celle de la partie interne 27, ce qui délimite une marche M entre la partie de base 26 et la partie interne 27. La marche M rejoint en arête rectiligne l'épaulement E.

Autrement dit, le charnon supérieur 18 comprend deux C l'un sur l'autre, formés par la partie de base 26 et la partie interne 27, le C de la partie interne 27 étant plus petit, c'est-à-dire de plus faible épaisseur et de plus grande ouverture que le C de la partie de base 26.

Le charnon intermédiaire 19 est une languette de forme générale de cylindre creux et ouvert, comme déjà indiqué, et délimité par une paroi extérieure 30 plane. Le charnon intermédiaire 19 comprend une partie, dite de base 31, surmontée, de part et d'autre, le long de la direction Z, d'une partie 32, dite supérieure, et d'une partie 33, dite inférieure, symétriques l'une de l'autre dans un plan (X,Y).

La partie de base 31 s'étend entre une première extrémité 34 et une deuxième extrémité 35 de la languette, se faisant face et délimitant un angle d'ouverture donné, par exemple compris entre 20° et 45°. Sur les modes de réalisation illustrés, l'angle d'ouverture α de la partie de base 31 est le même que celui de la partie de base 21 de la languette inférieure 17 et celui de la partie de base 26 de la languette supérieure 18.

Les parties supérieure et inférieure 32, 33, présentent un angle d'ouverture plus grand que celui de la partie de base 31, ce qui délimite deux épaulements E dans la paroi extérieure 30, le long de la direction Z. Dans un plan (X, Y), l'épaisseur de la partie de base 31 est supérieure à celle de chacune des parties supérieure 32 et inférieure 33, ce qui délimite deux marches M entre la partie de base 31 et la partie supérieure 32, et la partie de base 31 et la partie supérieure 33.

Comme visible sur les figures, une même distance sépare le charnon inférieur 17 du charnon intermédiaire 18 et le charnon intermédiaire 18 du charnon supérieur 19. On note h1 la distance selon la direction Z entre les extrémités 23 et 34, 24 et 35, 34 et 28, 35 et 29, respectivement.

Comme visible sur les figures, les parties de base 21, 26 et 31 présentent une même hauteur dans la direction Z et on appelle Sint la surface de chacune des parties de base 21, 26 et 31 délimitant les charnons de la partie mobile 3 du côté de l'espace interne creux.

Comme visible sur les figures, les parties de base 21, 26 et 31 de la partie mobile 3 présentent un même diamètre interne di. On note H la distance entre les extrémités inférieures et supérieures se faisant face, à savoir 23 et 28, et 24 et 29.

Comme visible sur les figures, le corps 10 comprend une portion de jonction 36, avec une face en forme de E, dont chacune des branches relie la partie portant la platine 16 à l'une des languettes 17 à 19.

L'angle d'ouverture α constitue l'ouverture angulaire de la partie mobile 3. Le volume interne délimité par l'espace creux entre les charnons 17 à 19 et de hauteur H est le volume interne de la partie mobile 3.

On décrit maintenant en détail la partie immobile 5.

Comme visible sur les figures, la partie immobile 5 comprend un corps 40, par exemple moulé, en plastique, comprenant une première partie 41 et une deuxième partie 42.

La première partie 41 comprend une portion de platine 43 pour la fixation de la partie immobile 5 au caisson 6. La platine 43 comprend deux orifices 44 pour faire passer des vis. Une surface externe, S, de la partie immobile 5 portant la platine 43 est plate, de sorte que la partie immobile 5 peut être plaquée contre le caisson 4.

La deuxième partie 42 porte les charnons 7 de la partie immobile 5. Sur les modes de réalisation illustrés, et de façon non limitative, la partie immobile comprend deux charnons, référencés 45, 46 et appelés respectivement charnon supérieur et charnon inférieur.

Les charnons 45 et 46 sont de forme générale de cylindre creux et ouvert, comme il sera détaillé. Les cylindres des charnons 45, 46 sont coaxiaux d'axe A-5 parallèle à la direction Z. Ainsi, le câble C peut être inséré dans les charnons et maintenu dans la charnière 1 le long de l'axe Z.

Le charnon supérieur 46 est une languette de forme générale de cylindre creux, ouvert, comme déjà indiqué, et délimité par une paroi extérieure plane 47. La paroi 47 s'étend entre une première extrémité 48 et une deuxième extrémité 49, se faisant face et délimitant un angle d'ouverture de la partie immobile 5. L'angle d'ouverture β est par exemple compris entre 20° et 45°. Sur les modes de réalisation illustrés, l'angle d'ouverture du charnon supérieur 45 est le même que celui du charnon inférieur 45.

Depuis le centre du cylindre, le charnon supérieur 46 comprend un premier cylindre 50 ouvert d'une hauteur H1 le long de la direction Z et délimité entre une paroi externe 51 et une paroi interne 52, opposée à la paroi externe 51.

Le charnon supérieur 46 comprend un deuxième cylindre ouvert 53, coaxial du premier cylindre 50. Le deuxième cylindre 53 s'étend entre une paroi interne, coïncidant avec la paroi interne 52 du premier cylindre 50 sur une hauteur H2 strictement inférieure à la hauteur H1, et une paroi externe 54, dont la hauteur n'est pas constante. La paroi externe 54 correspond à la paroi 47 extérieure du charnon 46.

Dans deux parties extrémales 55, 56, définies entre chaque extrémité de la languette 48, 49 et une partie centrale 57, la hauteur du deuxième cylindre 53 est celle du premier cylindre 50, H1, et, dans la partie centrale 57, la hauteur du deuxième cylindre 53 est égale à H2. Le charnon 46 présente une section en forme de H, comme visible sur les figures.

Dit autrement, deux épaulements E délimitent chacune des parties extrémales 55, 56. L'épaisseur des parties extrémales 55, 56 est inférieure strictement à l'épaisseur de la partie centrale.

On appelle Di un diamètre interne du charnon 46. On note H' la distance entre les extrémités inférieures et supérieures se faisant face, à savoir 23 et 28, et 24 et 29.

Le charnon inférieur 45 est identique au charnon supérieur 46. Aussi, pour simplifier la description, les mêmes références 47 à 57 s'appliquent au charnon inférieur 45.

L'angle d'ouverture β constitue l'ouverture angulaire de la partie immobile 5. De préférence, l'angle d'ouverture β de la partie immobile 5 est égal à l'angle d'ouverture α de la partie mobile 3.

Le volume interne délimité par l'espace creux entre les charnons 45 et 46, et de hauteur H' est le volume interne de la partie immobile 5.

Les charnons 17 à 19 de la partie mobile 3, et les charnons 45, 46 de la partie immobile 5 sont dimensionnés pour un fonctionnement optimal de la charnière 1.

La hauteur H1 des premier et deuxième cylindres 51, 53 des charnons 45, 46 de la partie immobile 5 est égale à la distance h1 entre les extrémités des charnons inférieur 17 et intermédiaire 19, et entre les extrémités des charnons intermédiaire 19 et supérieur 18, de la partie mobile 3.

Le diamètre di des parties de base 21, 26 et 31 de la partie mobile 3 est égal au diamètre Di des charnons 45, 46 de la partie immobile 5. Ainsi, comme visible sur la figure 4, une surface externe de la charnière 1 est plane en position d'insertion et d'extraction du câble.

La marche M des deux C de chaque charnon 17, 18, 19 de la partie mobile 3 est égale à la différence de hauteur entre les hauteurs H1 et H2. Ainsi, pour assembler la partie mobile 3 à la partie immobile 5, la partie du premier cylindre 50 de chacun des charnons 45, 46 qui fait saillie du deuxième cylindre 53, de part et d'autre du deuxième cylindre 53, d'une hauteur H1-H2, peut être calée contre les marches M des charnons 17 à 19. Ainsi, lors de la rotation de la partie mobile 3 relativement à la partie immobile 5, au cours de l'utlisation de la porte, les charnons 17 à 19 de la partie mobile se déplacent en étant guidés dans les charnons 45, 46 de la partie immobile.

On décrit maintenant l'assemblage de la charnière 1.

Dans un premier temps (figures 8A, 9A et 10A), on met en vis-à-vis les parties mobile 3 et immobile 5, puis on insère le charnon 46 de la partie immobile 5 entre les deux charnons supérieur 19 et intermédiaire 18 de la partie mobile 3, et le charnon 45 de la partie immobile 5 entre les deux charnons intermédiaire 18 et inférieur 17 de la partie mobile 3 jusqu'à ce que les charnons 17 à 19 de la partie mobile 3 soient bloqués en butée par les charnons 45, 46 de la partie immobile 5 (figures 5, 8B, 9B et 10B). Alors, les axes A-3 et A-5 coïncident, et les charnons 17 à 19 et 45, 46 sont coaxiaux.

Dans cette position, les ouvertures de chacun des charnons 17 à 19 de la partie mobile 3 sont superposées avec les ouvertures de charnons 45 et 46 de la partie immobile 5, ce qui ouvre un contour Co de la charnière 1 et permet l'insertion ou l'extraction du câble C. Cette position définit la position d'ouverture de la charnière 1. Dans cette position, les extrémités 23, 34, 28, 24, et 48 d'une part, et les extrémités 35, 34 et 29, 35, 29 et 49 d'autre part sont alignées.

La superposition des ouvertures des charnons des parties mobile 3 et immobile 5 définit une ouverture angulaire OA de la charnière 1, d'angle α. Un volume, creux, délimité par les surfaces Sint de la partie mobile 3 et les parois internes 52 de la partie immobile 5, délimite l'espace interne, Ei, de la charnière 1.

On note que le câble C s'étend dans la charnière 1 le long de l'axe A-3, A-5 de la charnière 1.

Ensuite, la charnière 1 étant installée sur le meuble, la partie mobile 3 pivote entre deux positions extrémales, à savoir, une position de fermeture de la porte (figures 8D, 9D, 10D et 11), et une position d'ouverture, dite maximale, de la porte (figures 8C, 9C et 10C), correspondant à un angle de rotation maximal autorisé, par exemple 110°.

Entre les deux positions extrémales y compris dans ces positions extrémales, le contour Co de la charnière 1 est fermé soit uniquement par les charnons 17 à 19 de la partie mobile 3, soit par les charnons 45, 46 de la partie immobile 5, soit par la superposition des charnons 17 à 19, 45, 46 des parties mobile 3 et immobile 5. Ainsi, le câble C est maintenu dans la charnière 1 dans les positions de fermeture de la charnière.

Toutes ces positions correspondent à des positions de fermeture de la charnière 1.

Selon les modes de réalisation illustrés, dans la position d'ouverture maximale (figures 8C, 9C et 10C), les ouvertures angulaires de la partie immobile 5 et de la partie mobile 3 sont obturées par les extrémités des charnons 17 à 19 de la partie mobile 3 disposées jointivement des extrémités des charnons 45, 46 de la partie immobile 5, ce qui ferme le contour Co.

Dans la position de fermeture, les ouvertures angulaires des parties immobile 5 et 3 sont obturées respectivement par des parties centrales des charnons de la partie opposée 3, 5, ce qui ferme le contour Co.

La course des charnons 17 à 19 de la partie mobile 3 est la suivante. Pour passer de la position d'ouverture de la charnière 1 à la position de fermeture de la charnière - porte ouverte d'ouverture maximale, les charnons 17 à 19 tournent dans un plan (X, Y) d'un angle suffisant (un quart de tour anti-horaire sur les modes de réalisation illustrés) pour que les extrémités des charnons 17 à 19 soient jointives des extrémités des charnons 45, 46. Puis, pour fermer la porte, la charnière étant toujours en position fermée, les charnons 17 à 19 pivotent, toujours dans le même sens (d'un quart de tour sur les modes de réalisation illustrés). En d'autres termes, la course et les dimensions de la partie mobile 3 sont telles que les charnons 17 à 19 se déplacent de façon à toujours obturer l'ouverture angulaire des charnons 45, 46 de la partie immobile 5 dans la position de la charnière 1.

On note que, bien entendu, l'invention n'est pas limitée à ce sens de rotation anti-horaire, ni à la valeur d'un quart de tour.

Selon un autre mode de réalisation, la charnière 1 comprend un dispositif de verrouillage 60 de la charnière en position de fermeture.

Sur les figures 12 à 15, le dispositif de verrouillage 60 comprend une patte 61 et une surface d'appui 62 de la patte 61 sur l'un des charnons 45, 46. La surface d'appui est un épaulement creusé dans le cylindre 53 du charnon supérieur 46.

Le dispositif de verrouillage 60 comprend un moyen d'actionnement 63 de la patte 61. Sur les figures 12 à 15, le moyen d'actionnement 63 comprend un bras flexible 64, solidaire de la patte 61 et activable par un bouton 65.

Lorsqu'on utilise la porte, le charnon 45, 46 de la partie mobile peut pivoter entre la position d'ouverture maximale de la porte et la position de fermeture de la porte, mais sa course est bloquée au-delà par la butée de la patte 61 contre la surface d'appui 62, ce qui verrouille la charnière 1 dans la position de fermeture.

Lorsque l'on veut ouvrir la charnière 1, pour insérer ou extraire le câble C, on active le bouton 65, ce qui tire la patte 61 dans un sens d'éloignement de la surface d'appui 62 et autorise les charnons 45, 46 à se déplacer jusqu'à la position d'ouverture de la charnière 1. En d'autres termes, la course des charnons augmente jusqu'à atteindre la position d'ouverture de la charnière 1.

Selon une variante non illustrée, le moyen d'actionnement 63 est sécurisé. Il peut s'agir par exemple d'une empreinte de réception d'un accessoire, tel qu'un tournevis.

La charnière 1 selon le deuxième mode de réalisation est, en dehors de la présence du dispositif de verrouillage 60, identique à la charnière 1 selon le premier mode de réalisation.

La charnière 1 selon les modes de réalisation de la présente invention peut être montée ou démontée sans qu'il soit nécessaire de couper le câble inséré dans la charnière. Au contraire, il suffit d'extraire le câble avant de déposer la charnière 1. La charnière 1 selon les modes de réalisation de la présente invention permet également de modifier le câblage de l'aéronef sans démonter la charnière, puisqu'il suffit d'ouvrir la charnière 1, remplacer le câble, et refermer la charnière 1.

On note que la charnière 1 ne présente pas d'axe physique. L'axe de la charnière 1 est réalisé par la superposition des charnons 17 à 19 et 45, 46 des parties mobile 3 et immobile 5.

Des modifications et des améliorations aux mises en œuvre décrites ci-dessus de la présente invention peuvent apparaître à l'homme du métier. En particulier, les modes de réalisation et variantes décrites sont combinables dans la mesure où ils ne sont pas incompatibles. La description ci-dessus est illustrative au travers d'exemples plutôt que limitative. La portée de la présente invention est donc limitée uniquement par la portée des revendications ci-dessous.

## Revendications

1. Charnière (1) destinée à ouvrir ou fermer une porte (4), par exemple d'une armoire électrique d'un aéronef, comprenant au moins une première paroi (20, 25, 30) et une deuxième paroi (47) délimitant une ouverture angulaire (α, β) de la charnière (1) et un espace interne (Ei), creux, de la charnière (1), dimensionné pour recevoir un câble (C), la première et la deuxième paroi étant positionnées l'une relativement à l'autre pour :
- ouvrir la charnière (1) dans une position d'insertion ou d'extraction du câble, pour laisser passer le câble (C) par l'ouverture angulaire (α) de la charnière (1) dans l'espace interne ou hors de l'espace interne, et,
- fermer la charnière (1) dans des positions de travail de la charnière, entre une position d'ouverture maximale de la porte et une position de fermeture de la porte, pour obturer l'ouverture angulaire (α) de la charnière (1), de sorte à pouvoir enfermer le câble dans l'espace creux (Ei).

2. Charnière (1) selon la revendication précédente, dans laquelle chacune des première (20, 25, 30) et deuxième paroi (47), respectivement, s'étend entre deux extrémités espacées l'une de l'autre pour former ouverture angulaire et délimite un espace interne, creux, la charnière étant conformée pour que :
- dans la position d'insertion ou d'extraction du câble, l'ouverture angulaire (α) de la première paroi (20, 25, 30) et l'ouverture angulaire (β) de la deuxième paroi (47) se superposent,
- dans les positions de travail de la porte, l'ouverture angulaire (α) de la première paroi (20, 25, 30) est décalée de l'ouverture angulaire (β) de la deuxième paroi (47) pour fermer la charnière,
les première et deuxième parois étant alignées de sorte à définir un axe (A) de la charnière.

3. Charnière (1) selon la revendication précédente, comprenant une partie, dite partie mobile (3), destinée à être fixée à la porte de l'armoire, et une partie, dite immobile (5), destinée à être fixée à un caisson de l'armoire, la partie mobile (3) comprenant au moins un charnon (17, 18, 19) formant ladite première paroi (20, 25, 30) de la charnière et la partie immobile (5) comprenant au moins un charnon (45, 46) formant ladite deuxième paroi (47) de la charnière, l'axe de la charnière étant réalisé par la superposition des charnons (17, 18, 19, 45, 46) des parties mobile et immobile..

4. Charnière (1) selon la revendication précédente, dans laquelle l'une (3, 5) de la partie mobile (3) et la partie immobile (5) comprend un nombre de charnons supérieur de un au nombre de charnons de l'autre (5, 3) de la partie mobile (3) et de la partie immobile (5).

5. Charnière (1) selon la revendication précédente, dans laquelle l'une (3, 5) des parties mobile (3) et immobile (5) comprend au moins deux charnons espacés l'un de l'autre de sorte à former un guidage d'au moins un charnon de l'autre (5, 3) des parties mobile (3) et immobile (5).

6. Charnière (1) selon l'une des revendications précédentes, comprenant un dispositif de verrouillage (60) conformé pour bloquer la charnière (1) en position fermée.

7. Armoire électrique, comprenant une charnière selon l'une des revendications précédentes.

8. Aéronef, comprenant une armoire électrique selon la revendication précédente.

9. Trappe d'aéronef, comprenant une charnière selon l'une des revendications 1 à 6.
